# EUROPÄISCHE PATENTANMELDUNG

(11) **EP 4 671 345 A1**
(43) Veröffentlichungstag der Anmeldung: **31.12.2025**
(21) Anmeldenummer: 25185654.8
(22) Anmeldetag: 26.06.2025
(51) Int. Cl.: C10B 19/00, C10B 53/07, C10B 47/44, H05B 1/02, H05B 3/00, H02M 5/00

(54) **MITTELS FREQUENZUMRICHTER ANGESTEUERTE HEIZELEMENTE EINER HEIZUNG ZUR ERHITZUNG EINES STOFFES ODER STOFFGEMISCHES IN EINER EINRICHTUNG**

(30) Priorität: 26.06.2024 DE 102024118134
(71) Anmelder: Enespa Technologies AG, 9050 Appenzell (CH)
(72) Erfinder: Schroer, Robin, 9050 Appenzell (CH)
(74) Vertreter: RGTH

(57) **Zusammenfassung**

Um eine Einrichtung zur Erhitzung eines Stoffes oder Stoffgemisches, wobei die Einrichtung eine Heizung mit mindestens einem Heizelement und mindestens eine Steuerungseinrichtung zur Ansteuerung des mindestens einen Heizelementes aufweist, derart zu verbessern, dass die Temperatur auch in hohen Temperaturbereichen möglichst präzise eingestellt werden kann, wird vorgeschlagen, dass die mindestens eine Steuerungseinrichtung einen Frequenzumrichter aufweist oder aus diesem besteht.

## Beschreibung

### Technisches Gebiet

Die Erfindung betrifft eine Einrichtung zur Erhitzung eines Stoffes oder Stoffgemisches, wobei die Einrichtung eine Heizung mit mindestens einem Heizelement und mindestens eine Steuerungseinrichtung zur Ansteuerung des mindestens einen Heizelementes aufweist.

Des Weiteren betrifft die Erfindung eine Kunststoffpyrolyseanlage mit mindestens einer Einrichtung zur Erhitzung eines Stoffes oder Stoffgemisches.

Ferner betrifft die Erfindung ein Verfahren zur Ansteuerung eines Heizelementes einer Heizung für eine Einrichtung zur Erhitzung eines Stoffes oder Stoffgemisches.

Des Weiteren betrifft die Erfindung eine Verwendung eines Frequenzumrichters zur Ansteuerung eines Heizelementes einer Heizung für eine Einrichtung zur Erhitzung eines Stoffes oder Stoffgemisches.

### Stand der Technik

In der EP 0297424 B1 wird ein Verfahren zum Kühlen von heißem Pyrolysegas, das bei der Pyrolyse von Kunststoff, Gummi oder andere Kohlenwasserstoffe enthaltenem Abfallmaterial anfällt, wobei in wenigstens zwei vom Pyrolysegas nacheinander durchströmten Kühlstufen das gewonnene Pyrolyseöl in direktem Wärmetausch gekühlt wird.

### Darstellung der Erfindung: Aufgabe, Lösung, Vorteile

Aufgabe der vorliegenden Erfindung ist es, eine Einrichtung zur Erhitzung eines Stoffes oder Stoffgemisches, wobei die Einrichtung eine Heizung mit mindestens einem Heizelement und mindestens einer Steuerungseinrichtung zur Ansteuerung des mindestens einen Heizelementes aufweist, derart zu verbessern, dass eine möglichst präzise Temperaturregelung des Stoffes oder Stoffgemisches innerhalb der Einrichtung auch bei sehr hohen Temperaturen unter Vermeidung von großen Temperaturschwankungen erreicht werden kann.

Erfindungsgemäß wird hierfür eine Einrichtung zur Erhitzung eines Stoffes oder Stoffgemisches, wobei die Einrichtung eine Heizung mit mindestens einem Heizelement und mindestens einer Steuerungseinrichtung zur Ansteuerung des mindestens einen Heizelementes aufweist, vorgeschlagen, wobei erfindungsgemäß die mindestens eine Steuerungseinrichtung einen Frequenzumrichter aufweist oder aus diesem besteht.

Die Einrichtung zur Erhitzung eines Stoffes oder Stoffgemisches kann jede geeignete Form aufweisen und stellt im Wesentlichen ein Behältnis zur Aufnahme des Stoffes oder Stoffgemisches dar. In dem Behältnis kann der Stoff oder das Stoffgemisch zur Erhitzung eingebracht und/oder durch das Behältnis zur Erhitzung hindurchgeführt beziehungsweise befördert werden.

Die Einrichtung kann Teil einer Anlage, zum Beispiel einer Wassererwärmungsanlage, einer Druckgussmaschine oder einer Kunststoffschmelzanlage sein. Insbesondere ist die Einrichtung Teil einer Kunststoffpyrolyseanlage.

Der Stoff oder das Stoffgemisch kann ein Feststoff, eine Flüssigkeit oder in gasförmigen Zustand sein. Bevorzugterweise wird der Einrichtung der Stoff oder das Stoffgemisch in festem Zustand zugeführt und innerhalb der Einrichtung derart erhitzt, dass der Stoff beziehungsweise das Stoffgemisch in den flüssigen oder auch gasförmigen Zustand übergeht.

Zur Ansteuerung des mindestens einen Heizelementes dient erfindungsgemäß ein Frequenzumrichter, der das Heizelement mit der eingestellten Spannung versorgt. Abhängig von der gewünschten Soll-Temperatur wird die Ausgangsspannung des Frequenzumrichters entsprechend variiert.

Zur Ansteuerung von Heizelementen für derartige Einrichtungen können prinzipiell elektrische Komponenten genutzt werden, um die Heizelemente in den entsprechenden Temperaturbereichen zu steuern. Beispielsweise werden hierfür einfache elektrische Schaltelemente, wie zum Beispiel Solid-State-Relais verwendet. In einem weiteren Entwicklungsschritt wurden PID-Regler oder Thyristorsteller verwendet, welche analog geregelt werden können. In allen Fällen hat sich allerdings gezeigt, dass die Temperaturabweichungen beziehungsweise die entstehenden Toleranzen insbesondere bei hohen Temperaturen, zum Beispiel im Bereich von über 350°C, für viele Anwendungen unangemessen hoch sind.

Die genannten elektrischen Komponenten zur Ansteuerung der Heizelemente müssen in der Regel in der Aufheizphase auf einen relativ hohen Spannungsbereich eingestellt werden, damit diese überhaupt durchschalten. Dies führt allerdings dazu, dass im Aufheizbereich die Temperaturen auch schnell über die gewünschte Temperatur geraten oder eine präzise Regelung beziehungsweise Einstellung der Temperatur lange Zeit, oft mehrere Stunden in Anspruch nimmt. Insbesondere für Anwendungen, bei denen die Temperaturen gradgenau, also mit nur sehr geringen Schwankungen und Toleranzen, eingestellt werden müssen, stellen solche Regelungskomponenten eine unzureichende Basis dar. Während des Aufheizprozesses schwingen die Temperaturen oft über und müssen über lange Zeit hoch und runter geregelt werden, bis die gewünschte Temperatur exakt eingestellt ist. Dies führt auch zu einem unnötig hohen Stromverbrauch.

Überraschenderweise hat sich herausgestellt, dass sich die Ansteuerung eines Heizelementes einer Heizung mittels eines Frequenzumrichters viel genauer bewerkstelligen lässt und die vorgenannten Nachteile überwindet.

Heizelemente stellen im Wesentlichen einen Ohmschen Widerstand dar, wobei mittels Stromdurchfluss Heizwärme erzeugt wird.

Frequenzumrichter sind dagegen üblicherweise für die Ansteuerung von Elektromotoren bekannt. Dabei ist der Verbraucher aus Sicht des Frequenzumrichters kein Heizwiderstand, sondern ein Elektromotor, wobei der Rotor die Drehung erzeugt.

Um die Temperaturregelung noch präziser zu gestalten, wird der Frequenzumrichter gemäß der vorliegenden Erfindung entsprechend parametriert und eingestellt. Beispielsweise kann hier mittels eines Softwarebausteins erreicht werden, dass Ausgangsspannungen in Schritten von 0,1 Volt stufenweise erzeugt werden, welche dann zur sehr genauen Ansteuerung des Heizelementes dienen. Dadurch kann erreicht werden, dass keine Temperaturüberschwünge mehr stattfinden und die Temperatur auf eine Genauigkeit von +/- 0,1°C geregelt werden kann. Um eine gewünschte Temperatur zu halten, sind dann nur sehr kleine Spannungen, z.B. im Bereich von 1 Volt bis 5 Volt erforderlich. Auch beim Aufheizen können Temperaturüberschwünge vollständig vermieden werden, wodurch eine Aufheizzeit auf ein Drittel oder Viertel reduziert werden kann.

Somit ist ein weiterer Vorteil der Ansteuerung des Heizelementes mit einem Frequenzumrichter, dass durch die geringere Aufheizzeit, die präzisere Temperatureinstellung und das präzise Halten eine Soll-Temperatur mit sehr kleinen konstanten Ausgangsspannungen mindestens 50 % Energie gegenüber einer üblichen Ansteuerung mit denselben Heizelementen erreicht werden kann.

Bevorzugterweise ist die Einrichtung länglich, besonders bevorzugterweise rohrförmig ausgebildet. Dabei kann die Einrichtung vertikal, horizontal oder auch schräg in einer Anlage angeordnet sein.

Bevorzugterweise weist die Einrichtung einen Einlass zur Einführung des Stoffes oder Stoffgemisches und einen Auslass zur Entnahme des erhitzten Stoffes oder Stoffgemisches auf. Da durch die Erhitzung des Stoffes oder Stoffgemisches der Stoff beziehungsweise das Stoffgemisch chemisch verändert werden kann, dient der Auslass auch zur Entnahme eines durch die Erhitzung im Inneren der Einrichtung erzeugten Resultats. Unter Entnahme ist im Sinne der Erfindung auch ein Übertritt des erhitzten Stoffes beziehungsweise Stoffgemisches aus der Einrichtung in eine weitere Einrichtung zu verstehen.

Der Einlass und/oder Auslass können verschließbare Öffnungen, Ventile oder ähnliches sein. Der Einlass und Auslass sind bevorzugterweise an einander gegenüberliegenden Seiten der Einrichtung angeordnet. Dadurch kann der Stoff beziehungsweise das Stoffgemisch auf dem Weg vom Einlass zum Auslass kontinuierlich erhitzt werden.

Auch ist bevorzugterweise vorgesehen, dass die Einrichtung in ihrem Inneren eine Fördereinrichtung zum Fördern beziehungsweise Durchführen oder Durchleiten des Stoffes oder Stoffgemisches aufweist. Die Fördereinrichtung kann beispielsweise als Förderschnecke ausgebildet sein. Die Fördereinrichtung dient der Förderung des Stoffes beziehungsweise des Stoffgemisches vom Einlass zum Auslass. Sie fördert das Fördergut somit vom Einlass zum Auslass entlang einer vorgegebenen Förderachse. Dabei wird das Fördergut, also der Stoff beziehungsweise das Stoffgemisch, entlang der inneren Wandung der Einrichtung geführt, um in diesem Bereich einen Wärmeeintrag durch die an der Außenwand angeordneten Heizelemente zu erwirken.

Hierfür ist das mindestens eine Heizelement bevorzugterweise an einer Außenwand der Einrichtung angeordnet.

Die Heizung weist bevorzugterweise mehrere individuell ansteuerbare oder individuell angesteuerte Heizelemente auf. Die Temperaturen können dabei abschnittsweise im Inneren der Einrichtung individuell und unterschiedlich eingestellt werden. Beispielsweise kann jedes einzelne Heizelement auf eine andere Soll-Temperatur eingestellt werden. Vorzugsweise sind zur individuellen Ansteuerung jedes einzelnen Heizelementes auch mehrere Steuerungseinrichtungen mit Frequenzeinrichtern vorgesehen.

Die Heizelemente sind bevorzugterweise hintereinander und/oder nebeneinander entlang der Einrichtung an dessen Außenwand angeordnet. Bei einer länglich beziehungsweise rohrförmig ausgebildeten Einrichtung sind die Heizelemente vorzugsweise um das Rohr herum und hintereinander angeordnet.

Durch das Vorsehen einer Vielzahl von Heizelementen entlang der Förderrichtung von Einlass hin zum Auslass kann somit eine ansteigende Soll-Temperatur eingestellt werden und der Stoff beziehungsweise das Stoffgemisch beim Fördern durch die Einrichtung hindurch kontinuierlich erhitzt werden.

Auch ist bevorzugterweise vorgesehen, dass die Heizung Temperaturfühler zur Messung einer Ist-Temperatur des Stoffes und/oder des Stoffgemisches aufweist, wobei die Temperaturfühler in einen Innenraum der Einrichtung hineinragen und elektrisch und/oder kommunikationstechnisch mit der mindestens einen Steuerungseinrichtung gekoppelt sind. Mittels der Temperaturfühler wird die Ist-Temperatur an verschiedenen Stellen im Inneren der Einrichtung gemessen. Die gemessene Ist-Temperatur dient dann als Eingangssignal für die Steuerungseinrichtung zur Regelung der gewünschten Soll-Temperatur in diesem Abschnitt im Inneren der Einrichtung. Hierzu wird mittels des Frequenzumrichters die Spannung für das entsprechende Heizelement angepasst.

Des Weiteren ist bevorzugterweise vorgesehen, dass die Einrichtung vollständig mit den Heizelementen ummantelt ist.

Das mindestens eine Heizelement ist bevorzugterweise als Heizmanschette ausgebildet. Beispielsweise kann das Heizelement als mehrphasige, insbesondere 3-phasige Heizmanschette ausgebildet sein. Die drei Phasen des Heizelementes werden dann beispielsweise mit den Ausgängen U1, V1 und W1 des Frequenzumrichters verbunden.

Erfindungsgemäß ist ferner eine Kunststoffpyrolyseanlage mit mindestens einer vorbeschriebenen Einrichtung zur Erhitzung eines Stoffes oder Stoffgemisches vorgesehen. Dabei ist die mindestens eine vorbeschriebene Einrichtung als Reaktorrohr zur thermochemischen Spaltung organischer Verbindungen durch gezielte Hitzeeinwirkung unter vollständigem Ausschluss von Sauerstoff ausgebildet.

Die Kunststoffpyrolyseanlage dient der thermochemischen Spaltung organischer Verbindungen durch gezielte Hitzeeinwirkungen bei Temperaturen von über 350°C. Dies führt zu einem Bindungsbruch innerhalb großer Moleküle unter vollständigem Ausschluss von Sauerstoff. Die Hauptfunktion besteht darin, PE- und PP-haltige Kunststoffabfälle zu verarbeiten, um vorrangig Pyrolyseöl und - gas zu gewinnen.

Die Kunststoffpyrolyseanlage ist also eine verfahrenstechnische Anlage zur Verarbeitung von Kunststoffresten (Polyolefine) zur Gewinnung von Wertstoffen, wie zum Beispiel hochwertigen Ölen, Gasen, Diesel und Kohlenstoff. Mögliche Stoffe oder Stoffgemische enthalten also LDPE, HDPE, LLDPE, PP, PP+C und/oder PE.

Die Kunststoffpyrolyseanlage arbeitet auf Basis einer thermochemischen Spaltung organischer Verbindung bei Temperaturen von über 350°C. Beispielsweise wird der Stoff oder das Stoffgemisch im Inneren des Reaktorrohrs mittels der vorbeschriebenen Heizung auf einen Temperaturbereich zwischen 400°C und 600°C erhitzt. Dieser Prozess unterscheidet sich von der Vergasung und Verbrennung, da er ausschließlich durch Wärme und unter Ausschluss von Sauerstoff stattfindet. Dabei entstehen Gase, Flüssigkeiten und Feststoffe, wobei die Mengenanteile und die Zusammensetzung nicht nur vom einzelnen Material, sondern auch von der Prozesstemperatur, den zugegebenen Hilfsstoffen, den Druckverhältnissen und der Behandlungsdauer abhängen.

Das Eingangsmaterial wird über einen Eingangsstutzen, beziehungsweise den Einlass in das Reaktorrohr eingebracht. Im Reaktorrohr wird das Material über eine Fördereinrichtung transportiert und dabei durchmischt, um einen bestmöglichen Wärmeübergang zu ermöglichen. Die Beheizung der Außenwand des Reaktorrohrs erfolgt durch Heizelemente in Form von elektrischen Heizmanschetten. Innerhalb des Reaktorrohrs beginnt bei Erreichen von spezifischen Temperaturgrenzen der Pyrolyseprozess. Dabei werden molekulare Verbindungen des Materials aufgebrochen und entstehen kurzkettige Moleküle.

Bevorzugterweise weist die Kunststoffpyrolyseanlage mehrere hintereinander geschaltete vorbeschriebene Einrichtungen auf. Im Anschluss an das erste Reaktorrohr wird das Material dann in ein zweites Reaktorrohr befördert. Innerhalb des zweiten Reaktorrohrs, welches wie das erste Reaktorrohr und somit die vorbeschriebene Einrichtung aufgebaut ist, wird ebenfalls über eine Fördereinrichtung der Stoff oder das Stoffgemisch transportiert und durchgemischt. Nach Erhitzung entstehendes Pyrolysegas verlässt das jeweilige Reaktorrohr über ein Steigrohr. Zurückbleibender Feststoff aus dem Pyrolyseprozess wird am Ende des zweiten Reaktorrohrs über einen Feststoffaustrag gesammelt.

Das Pyrolysegas wird dann in Kondensationsschritten in einem Hochtemperaturkondensator und einem Niedrigtemperaturkondensator verflüssigt. Die Kühlung wird über einen indirekten Kreislauf realisiert. Die kondensierten Ölfraktionen aus den beiden Kondensationsstufen können dann automatisch in entsprechende Lagertanks gefördert werden. Nicht kondensierbare Komponenten des Pyrolysegases werden innerhalb der Anlage mit Wasser gereinigt.

Erfindungsgemäß ist ferner ein Verfahren zur Ansteuerung eines Heizelementes einer Heizung für eine vorbeschriebene Einrichtung vorgesehen, wobei das Heizelement mittels einer Steuerungseinrichtung angesteuert wird und die Steuerungseinrichtung einen Frequenzumrichter aufweist, oder aus diesem besteht. Mittels des Frequenzumrichters wird eine elektrische Spannung eingestellt und das Heizelement angelegt.

Die Steuerungseinrichtung weist ferner einen Softwarebaustein auf, wodurch in möglichst keinen Spannungsschritten, beispielsweise in 0,1 Volt-Schritten eine Ausgangsspannung am Frequenzumrichter erzeugt wird, mittels welcher das Heizelement präzise angesteuert werden kann. Insbesondere bei der Aufheizphase kann somit ein Überschwingen der Temperatur vermieden und die gewünschte Endtemperatur präzise und in sehr kurzer Zeit eingestellt werden.

Bevorzugterweise wird mittels des Frequenzumrichters kontinuierlich ein elektrischer Widerstand einer Wicklung des Heizelementes gemessen. Ein Ausfall des Heizelementes kann somit frühzeitig erkannt werden. Bei Heizelementen mit mehreren Wicklungen kann dabei auch erkannt werden, wenn sich die Widerstände der einzelnen Wicklungen so verändern, dass diese voneinander abweichen. Auch dies deutet auf einen baldigen Ausfall des Heizelementes hin. Durch die Verwendung eines Frequenzumrichters zur Ansteuerung der Heizelemente, kann auf zusätzliche Messgeräte verzichtet werden. Mit dem Frequenzumrichter kann gleichzeitig kontinuierlich der Widerstand der Wicklung des Heizelements gemessen und überwacht werden.

Erfindungsgemäß ist ferner die Verwendung eines Frequenzumrichters zur Ansteuerung eines Heizelementes einer Heizung für eine vorbeschriebene Einrichtung vorgesehen.

### Kurze Beschreibung der Zeichnungen

Die Erfindung wird im Folgenden anhand bevorzugter Ausführungsformen beispielhaft erläutert. Es zeigen schematisch:
- Figur 1:: eine perspektivische Ansicht einer Einrichtung zur Erhitzung eines Stoffes oder Stoffgemisches,
- Figur 2:: eine perspektivische Ansicht eines Ausschnitts einer Einrichtung zur Erhitzung eines Stoffes oder Stoffgemisches, und
- Figur 3:: eine vereinfachte Darstellung von Komponenten einer Kunststoffpyrolyseanlage.

### Bevorzugte Ausführungsformen der Erfindung

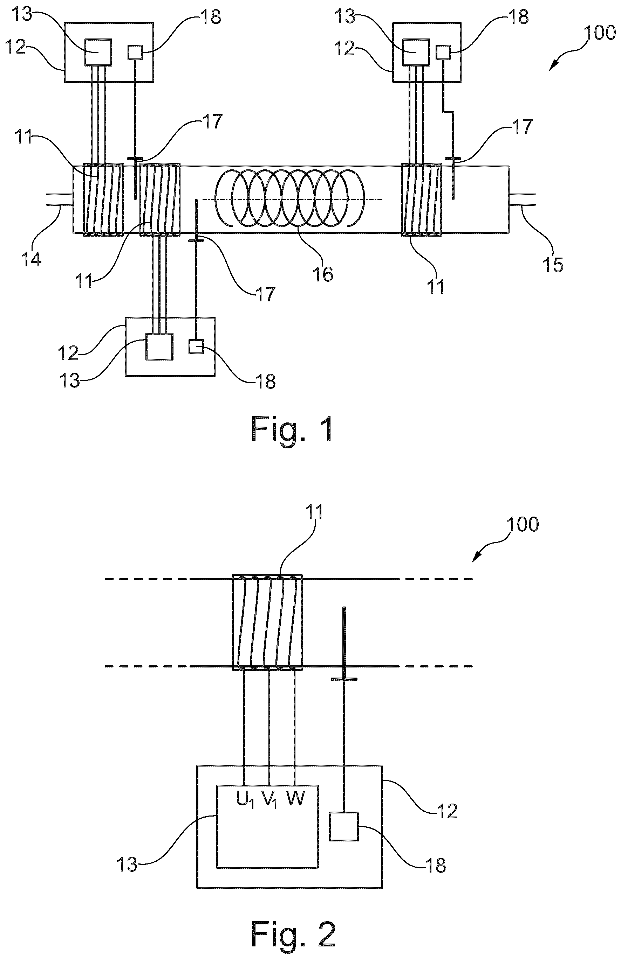

Figur 1 zeigt eine schematische Darstellung einer Einrichtung 100 zur Erhitzung eines Stoffes oder Stoffgemisches. Die Einrichtung 100 ist dabei rohrförmig in Form eines Reaktorrohrs für eine Kunststoffpyrolyseanlage 200 (der besseren Übersicht halber in Figur 1 nicht dargestellt) ausgebildet. Die Einrichtung 100 weist in deren Innenraum eine Fördereinrichtung 16 zur Förderung eines zu erhitzenden Stoffes oder Stoffgemisches auf. Die Fördereinrichtung 16 ist in Form einer Förderschnecke ausgebildet und in Figur 1 nur in Prinzipdarstellung in der Mitte der Einrichtung 100 eingezeichnet.

Die Einrichtung 100 weist einen Einlass 14 und einen Auslass 15 auf. Mittels der Fördereinrichtung 16 wird der am Einlass zugeführte Stoff beziehungsweise das Stoffgemisch in Längsrichtung durch die Einrichtung 100 zum Auslass 15 befördert.

Der durch die Einrichtung 100 hindurchgeführte Stoff beziehungsweise das Stoffgemisch wird mittels mehrerer Heizungen 10 kontinuierlich erhitzt. Dabei weist jede einzelne Heizung 10 ein separates Heizelement 11 und eine Steuerungseinrichtung 12 auf. Die Steuerungseinrichtung 12 weist einen Softwarebaustein 18 auf, welcher eine durch einen Temperaturfühler 17 ermittelte Ist-Temperatur in einem Abschnitt im Innenraum der Einrichtung 100 erfasst und den Frequenzumrichter 13 der Steuerungseinrichtung 12 entsprechend ansteuert. Mittels des Frequenzumrichters 13 wird dann eine genaue Ausgangsspannung an das Heizelement 11 angelegt, um die Temperatur in diesem Abschnitt im Innenraum der Einrichtung 100 möglichst präzise zu regeln.

Das Heizelement 11 ist dabei als Heizmanschette und umfänglich vollständig um die rohrförmig ausgebildete Einrichtung 100 herum angeordnet. Der besseren Übersicht halber sind in Figur 1 lediglich drei Heizungen 10 mit jeweils einem Heizelement 11 dargestellt.

Bevorzugterweise sind in Längsrichtung der rohrförmig ausgebildeten Einrichtung 100 die Heizelemente 11 derart angeordnet, dass diese direkt aneinandergrenzend hintereinander in Längsrichtung entlang der Einrichtung 100 die Außenwand der Einrichtung 100 aufheizen. Dabei kann die Soll-Temperatur vom Einlass 14 hin zum Auslass 15 kontinuierlich steigend geregelt werden.

Figur 2 zeigt zur besseren Übersicht einen Ausschnitt aus der in Figur 1 dargestellten Einrichtung 100, wobei in diesem Ausschnitt lediglich ein Abschnitt der Einrichtung 100 mit einer Heizung 10 und einem Heizelement 11 dargestellt ist. Das Heizelement 11 ist als dreiphasige Wechselstromheizung in Form einer Heizmanschette ausgebildet und umfänglich vollständig um die rohrförmig ausgebildete Einrichtung 100 herum angeordnet. Die dreiphasig ausgebildete Heizmanschette wird dabei über die drei Ausgangsspannungen U1, V1 und W1 des Frequenzumrichters 13 mit Spannung versorgt.

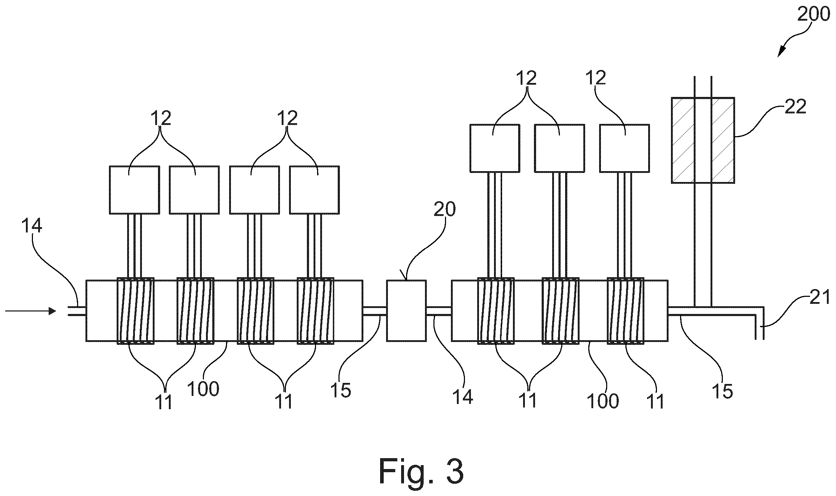

In Figur 3 ist ein Ausschnitt einer Kunststoffpyrolyseanlage 200 in sehr vereinfachter Weise dargestellt. In Figur 3 sind dabei lediglich die für die Erfindung wesentlichen Komponenten der Kunststoffpyrolyseanlage 200 dargestellt.

Beispielhaft sind in Figur 3 zwei hintereinander geschaltete Einrichtungen 100 zur Erhitzung eines Stoffes oder Stoffgemisches dargestellt. Zwischen den beiden Einrichtungen 100 ist ein Ventil 20 angeordnet. Der Stoff beziehungsweise das Stoffgemisch wird dem Einlass 14 der ersten Einrichtung 100 hinzugeführt. Innerhalb der ersten Einrichtung 100 wird der Stoff beziehungsweise das Stoffgemisch in Längsrichtung mittels einer in Figur 3 nicht dargestellten Fördereinrichtung 16 hindurchgeführt und kontinuierlich mittels der an der Außenwand angeordneten Heizelemente 11 aufgeheizt. Dasselbe geschieht in der im Anschluss angeordneten zweiten Einrichtung 100. Das erzeugte Pyrolysegas wird nach dem Durchlaufen der zweiten Einrichtung 100 einem Kondensator 22 zugeführt. Der zurückbleibende Feststoff wird über einen Feststoffaustrag 21 eingesammelt.

### Bezugszeichenliste

- 100: Einrichtung zur Erhitzung eines Stoffes oder Stoffgemisches
- 200: Kunststoffpyrolyseanlage

- 10: Heizung
- 11: Heizelement
- 12: Steuerungseinrichtung
- 13: Frequenzumrichter
- 14: Einlass
- 15: Auslass
- 16: Fördereinrichtung
- 17: Temperaturfühler
- 18: Softwarebaustein

- 20: Ventil
- 21: Feststoffaustrag
- 22: Kondensator

## Patentansprüche

1. Einrichtung (100) zur Erhitzung eines Stoffes oder Stoffgemisches, wobei die Einrichtung (100) eine Heizung (10) mit mindestens einem Heizelement (11) und mindestens einer Steuerungseinrichtung (12) zur Ansteuerung des mindestens einen Heizelements (11) aufweist,
**dadurch gekennzeichnet,**
**dass** die mindestens eine Steuerungseinrichtung (12) einen Frequenzumrichter (13) aufweist oder aus diesem besteht.

2. Einrichtung (100) gemäß Anspruch 1,
**dadurch gekennzeichnet,**
**dass** die Einrichtung (100) länglich, insbesondere rohrförmig ausgebildet ist.

3. Einrichtung (100) gemäß Anspruch 1 oder 2,
**dadurch gekennzeichnet,**
**dass** die Einrichtung (100) einen Einlass (14) zur Einführung des Stoffes oder Stoffgemisches und einen Auslass (15) zur Entnahme des erhitzten Stoffes oder Stoffgemisches und/oder zur Entnahme eines durch die Erhitzung im Inneren der Einrichtung erzeugten Resultats aufweist.

4. Einrichtung (100) gemäß einem der vorhergehenden Ansprüche,
**dadurch gekennzeichnet,**
**dass** die Einrichtung (100) im Inneren eine Fördereinrichtung (16) zum Durchleiten des Stoffes oder Stoffgemisches durch die Einrichtung hindurch aufweist.

5. Einrichtung (100) gemäß einem der vorhergehenden Ansprüche,
**dadurch gekennzeichnet,**
**dass** das mindestens eine Heizelement (11) an einer Außenwand der Einrichtung (100) angeordnet ist.

6. Einrichtung (100) gemäß einem der vorhergehenden Ansprüche,
**dadurch gekennzeichnet,**
**dass** die Heizung (10) mehrere individuell ansteuerbare oder individuell angesteuerte Heizelemente (11) aufweist.

7. Einrichtung (100) gemäß den Anspruch 6,
**dadurch gekennzeichnet,**
**dass** die Heizelemente (11) hintereinander und/oder nebeneinander entlang der Einrichtung (100) an dessen Außenwand angeordnet sind.

8. Einrichtung (100) gemäß einem der vorhergehenden Ansprüche,
**dadurch gekennzeichnet,**
**dass** die Heizung (10) Temperaturfühler (17) zur Messung einer Ist-Temperatur des Stoffes und/oder Stoffgemisches aufweist, wobei die Temperaturfühler (17) in einen Innenraum der Einrichtung (100) hineinragen und elektrisch und/oder kommunikationstechnisch mit der mindestens einen Steuerungseinrichtung (12) gekoppelt sind.

9. Einrichtung (100) gemäß einem der Ansprüche 7 oder 8,
**dadurch gekennzeichnet,**
**dass** die Einrichtung (100) vollständig mit den Heizelementen (11) ummantelt ist.

10. Einrichtung (100) gemäß einem der vorhergehenden Ansprüche,
**dadurch gekennzeichnet,**
**dass** das mindestens eine Heizelement (11) als Heizmanschette ausgebildet ist.

11. Kunststoffpyrolyseanlage (200) mit mindestens einer Einrichtung (100) zur Erhitzung eines Stoffes oder Stoffgemisches gemäß einem der vorhergehenden Ansprüche,
**dadurch gekennzeichnet,**
**dass** die mindestens eine Einrichtung (100) als Reaktorrohr zur thermochemischen Spaltung organischer Verbindungen durch gezielte Hitzeeinwirkung unter vollständigem Ausschluss von Sauerstoff ausgebildet ist.

12. Kunststoffpyrolyseanlage (200) gemäß Anspruch 11,
**dadurch gekennzeichnet,**
**dass** die Kunststoffpyrolyseanlage (200) mehrere hintereinandergeschaltete Einrichtungen (100) aufweist.

13. Verfahren zur Ansteuerung eines Heizelements (11) einer Heizung (10) für eine Einrichtung (100) gemäß einem der Ansprüche 1 bis 10, wobei das Heizelement (11) mittels einer Steuerungseinrichtung (12) angesteuert wird,
**dadurch gekennzeichnet,**
**dass** die Steuerungseinrichtung (12) einen Frequenzumrichter (13) aufweist oder aus diesem besteht, wobei mittels des Frequenzumrichters (13) eine elektrische Spannung eingestellt und an das Heizelement (11) angelegt wird.

14. Verfahren gemäß Anspruch 13,
**dadurch gekennzeichnet,**
**dass** mittels des Frequenzumrichters (13) kontinuierlich ein elektrischer Widerstand einer Wicklung des Heizelements (11) gemessen wird.

15. Verwendung eines Frequenzumrichters (13) zur Ansteuerung eines Heizelements (11) einer Heizung (10) für eine Einrichtung (100) gemäß einem der Ansprüche 1 bis 10.
